# EUROPEAN PATENT APPLICATION

(11) **EP 1 818 273 A1**
(43) Date of publication of application: **15.08.2007**
(21) Application number: 05798989.9
(22) Date of filing: 19.10.2005
(51) Int. Cl.: B65D 47/08, C08L 67/00, C08K 5/09, C08K 5/20, C08L 101/16

(54) **HINGE CAP HAVING BIODEGRADABILTY**

(30) Priority: 29.10.2004 JP 2004316187; 12.11.2004 JP 2004329454
(71) Applicant: Mikasa Industry Co., Ltd., Kitakatsuragi-gun, Nara 635-0817 (JP)
(72) Inventor: MURAKAMI, Kunio, Mikasa Industry Co., Ltd., Kitakatsuragi-gun, Nara 635-0817 (JP); SAKAMOTO, Manabu, Mikasa Industry Co., Ltd., Kitakatsuragi-gun, Nara 635-0817 (JP)
(74) Representative: Barnfather, Karl Jon
(86) International application number: PCT/JP2005/019646
(87) International publication number: WO 2006/046582

(57) **Abstract**

A hinge cap comprising a cap body composed of a top wall, an ejection port provided in the top wall and a sidewall suspending from the circumferential edge of the top wall, and an upper lid hinged to the cap body and closing the ejection port, **characterized in that** the cap is composed of polyalkylene alkanoate resin having a flexural elastic modulus of 200-900 MPa, more preferably 300-800 MPa.

## Description

### Technical Field

The present invention relates to a cap made of a synthetic resin having a biodegradability. More specifically, it relates to a hinge cap having a biodegradability.

### Background Art

Examples of this type of the cap which has been so far used include a hinge cap in which a cap body and an upper lid are connected with a hinge having a thin portion (refer to, for example, Patent Document 1), and a snap hinge cap having a snap function in which a cap body and an upper lid are connected with a pair of elastic connection plates on both sides of a hinge having the thin portion (refer to, for example, Patent Document 2).
Patent Document 1: JP-Utility Model publication S49-26863
Patent Document 2: JP-Patent Appln. publication H08-301329

Since the upper lid is connected with the cap body in these hinge caps, there is no fear of losing the upper lid, and opening/closing operation by one hand is possible, which is very convenient in use. Further, in the snap hinge cap, there is no need to open or close the lid with force because of the snap function (a biasing force) of the elastic connection plates.

By the way, these hinge caps have been so far formed of a synthetic resin such as polyethylene or polypropylene. However, such polyolefinic polymers have little degradability in natural environment. These polymers have been problematic in view of environmental conservation because they remain semipermanently in the ground after having been discarded and buried.

A cap formed of polylactic acid having a biodegradability is disclosed in JP-patent appln. publication H06-105887. However, when a polylactic acid resin is used in a hinge cap, there is a problem that a hinge strength is decreased while repeating opening/closing operation of an upper lid so that the hinge is liable to break.

### Disclosure of the present invention

The present invention aims to provide a hinge cap having a biodegradability in which when opening/closing operation of an upper lid is repeated, a hinge strength is retained and the hinge is hardly broken similarly to the hinge cap made of polyethylene or polypropylene which has been so far used. Further, it aims to provide a hinge cap having a biodegradability with a snap function imparted.

The present inventors have assiduously conducted investigations to solve the foregoing problems, and have consequently found that a hinge cap retaining a hinge strength even in repeating opening/closing operation of an upper lid and excellent in snap function can be provided by forming the hinge cap with a polyalkylene alkanoate resin having a specific flexural elastic modulus. This finding has led to the completion of the present invention.

The present invention provides a hinge cap having a biodegradability, which comprises a cap body comprising a top wall, an ejection port formed in the top wall and a side wall suspending from a circumferential edge of the top wall, and an upper lid connected with the cap body via a hinge for closing the ejection port, characterized in that the cap is made of a polyalkylene alkanoate resin having a flexural elastic modulus of from 200 to 900 MPa. From the standpoint of retaining the hinge strength after the opening/closing operation of the upper lid, it is preferable that the flexural elastic modulus of the polyalkylene alkanoate resin used in the hinge cap of the present invention is from 300 to 800 MPa. It is especially preferable that the polyalkylene alkanoate resin used in the hinge cap of the present invention has the flexural elastic modulus of from 300 to 600 MPa. The present invention is characterized in that the polyalkylene alkanoate resin is polybutylene succinate, its copolymer or a mixture thereof. As an example of the copolymer of polybutylene succinate, polybutylene succinate adipate is mentioned. Other copolymers are of course available. The polyalkylene alkanoate resin used in the hinge cap of the present invention may contain from 0.01 to 5 parts by weight of a fatty acid, a fatty acid amide or a mixture of a fatty acid and a fatty acid amide, per 100 parts by weight of the polyalkylene alkanoate. The polyalkylene alkanoate resin used in the hinge cap of the present invention may contain from 1 to 10 parts by weight of an antiblocking agent, per 100 parts by weight of the polyalkylene alkanoate. It is advisable that the polyalkylene alkanoate resin used in the hinge cap of the present invention may contain from 0.1 to 10 parts by weight of a hydrolysis inhibitor, per 100 parts by weight of the polyalkylene alkanoate. The hinge of the hinge cap of the present invention may be adapted to have a snap function in turning the upper lid relative to the cap body. The hinge of the hinge cap of the present invention comprises a thin hinge by which to connect a side wall of the cap body and a side wall of the upper lid and a pair of elastic connection plates by which to connect the side wall of the cap body and the side wall of the upper lid on both sides of the thin hinge, and it may be adapted such that the elastic connection plates have a snap function in turning the upper lid relative to the cap body. The hinge of the hinge cap of the present invention also includes one in which the thin hinge and the elastic connection plates are integrally formed via a thin film. The hinge cap of the present invention is characterized in that a retention ratio of a tensile breaking stress of the hinge after opening and closing the upper lid 3,000 times is 30% or more. In the hinge cap of the present invention, it is advisable that the retention ratio of the tensile breaking stress of the hinge after opening and closing the upper lid 3,000 times is 50% or more.

The hinge cap comprising the polyalkylene alkanoate resin having the flexural elastic modulus of from 200 to 900 MPa in the present invention still retains a prescribed hinge strength in opening and closing the upper lid repeatedly. Further, a sealing retention is secured between a port of a container and the cap, so that the cap excellent in basic performance as a packaging container can be provided. Moreover, since it has an excellent biodegradability under conditions of forming a compost or the like in natural environment, it can be an eco-friendly packaging material.

### Brief Description of the Drawings

Fig. 1 is a plan view of a hinge cap used in Example of the present invention.
Fig. 2 is a side view of a hinge cap shown in Fig. 1 of the present invention.
Fig. 3 is a plan view of a hinge cap used in another Example of the present invention.
Fig. 4 is a sectional side view of the hinge cap shown in Fig. 3 of the present invention.

### Best Mode for Carrying Out the Present Invention

The present invention is described in detail below.

The present invention is characterized in that the hinge cap in which the cap body and the upper lid are connected via the hinge is formed of the polyalkylene alkanoate resin having the flexural elastic modulus of from 200 to 900 MPa, whereby the biodegradability is imparted to the cap and the hinge strength is retained in repeatedly conducting the opening/closing operation of the upper lid which is most required for the hinge cap.

The polyalkylene alkanoate resin used in the present invention is characterized in that the flexural elastic modulus according to JIS K7171 is from 200 to 900 MPa. When the flexural elastic modulus is more than 900 MPa, the hinge might be broken in repeatedly opening and closing the upper lid. When it is less than 200 MPa, deformation of the cap due to external stress is increased. Accordingly, these are undesirable. Moreover, in the snap hinge cap, the snap function is decreased. The flexural elastic modulus of the polyalkylene alkanoate resin is preferably from 300 to 800 MPa, especially preferably from 300 to 600 MPa.

Regarding the polyalkylene alkanoate resin used in the composition of the present invention, a resin obtained by condensing one or more of the following aliphatic polyhydric alcohols and one or more of the following aliphatic polybasic acids (or derivatives thereof) can optionally be used.

Examples of the aliphatic polyhydric alcohols as one of the materials of the polyalkylene alkanoate resin used in the present invention include ethylene glycol, 1,4-butanediol, 1,6-hexanediol, 1,8-octylene glycol, 1,10-decamethylene glycol, 1,4-cyclohexane dimethanol and the like. Of these, ethylene glycol, 1,4-butanediol and 1,4-cyclohexane dimethanol are preferable in consideration of properties of the resulting polyalkylene alkanoate resin.

Examples of the aliphatic polybasic acids (or derivatives thereof) as another material of the polyalkylene alkanoate resin used in the present invention include succinic acid, succinic anhydride, adipic acid, sebacic acid, dodecanedicarboxylic acid, 1,4-cyclohexanedicarboxylic acid and the like. Of these, succinic acid and adipic acid are preferable in consideration of properties of the resulting biodegradable aliphatic polyester resin. Further, as a copolymerizable component, aromatic polybasic acids such as terephthalic acid may be used in combination.

Examples of the polyalkylene alkanoate resin which is advantageous in the present invention include polybutylene succinate which is a dehydrative condensation product of 1,4-butanediol and succinic acid, polybutylene succinate adipate which is a dehydrative condensation product of 1,4-butanediol, succinic acid and adipic acid, and the like. Incidentally, as these polyalkylene alkanoate resins, it is advisable to use high-molecular compounds obtained by using a chain extender such as lactic acid, a polyvalent isocyanate or an acid anhydride. Further, a mixture of polybutylene adipate terephthalate obtained by dehydrative condensation of 1,4-butanediol, adipic acid and terephthalic acid with the polybutylene succinate and the polybutylene succinate adipate is mentioned. The foregoing polyalkylene alkanoate resins or the mixtures thereof which are mixed with other biodegradable resins such as starch are also available. In this case, the components are mixed such that the final flexural elastic modulus of the mixture is from 200 to 900 MPa, preferably from 300 to 800 MPa, more preferably from 300 to 600 MPa. As a mixing method of the mixture, known methods such as dry blending of pellets and melt kneading with an extruder can be employed.

In the hinge cap of the present invention, it is advisable to incorporate a lubricant in an amount of from 0.01 to 5 parts by weight per 100 parts by weight of the polyalkylene alkanoate for improving a mold releasability of the resin at the time of molding. In case of the molding by injection molding, it is required to consider a releasability from a mold for forming a molded article. For this reason, the specific amount of the lubricant is incorporated in the cap of the present invention, whereby the mold releasability in the molding can be improved to increase a moldability.

As a merit of containing the lubricant, a property of biting the resin into a screw at the time of the molding can be improved. When the specific amount of the lubricant is incorporated in charging the resin into a molding machine, the resin smoothly flows within the screw. However, when charging the lubricant in an amount of more than the specific range, the biting property rather worsens to cause poor molding.

As the lubricant, a so-called internal lubricant for imparting an internal lubricity and an external lubricant for imparting an external lubricity can both be used, and a combination of these is also available. As the lubricant used in the present invention, all of lubricants which are generally used in molding a resin can be applied. Especially when the resin of the present invention is used in food packages, it is advisable to use resins which are approved as food additives.

Specifically, it is possible to use fatty acids such as stearic acid proposed in JP-patent appln. publication H08-27363, fatty acid amides such as erucic acid amide, methylenebisstearic acid amide, ethylenebisstearic acid amide, ethylenebispalmitic acid amide and ethylenebisoleic acid amide or mixtures of the foregoing fatty acids and fatty acid amides.

It is advisable to incorporate, in addition to the foregoing lubricant, from 1 to 10 parts by weight of an antiblocking agent for roughening the surface of the molded product of the cap, per 100 parts by weight of the polyalkylene alkanoate, to increase the surface roughness and improve the mold releasability and for adjusting the biting property of the resin to improve the moldability. As the antiblocking agent, known antiblocking agents are available, and talc particles can advantageously be used.

The addition of the lubricant and the antiblocking agent may be either internal addition in which a master batch containing these components at relatively high concentrations is prepared and incorporated or external addition in which the lubricant and the antiblocking agent are directly added to pellets.

In the present invention, it is further advisable to incorporate from 0 .1 to 10 parts by weight of a hydrolysis inhibitor for inhibiting the hydrolysis, per 100 parts by weight of the polyalkylene alkanoate. Since the hinge cap is often used for packaging a food seasoning solution containing water, a resistance to hydrolysis is required. In the present invention, the resistance to hydrolysis can be improved without impairing the biodegradability inherent in the biodegradable aliphatic polyester resin by incorporating the specific amount of the hydrolysis inhibitor. As the hydrolysis inhibitor, its type is not particularly limited so long as the hydrolysis can be inhibited.

As the hydrolysis inhibitor, for example, at least one of the groups consisting of carbodiimide compounds, surface-treated inorganic fillers, laminar silicic acid salts, hydrophobic waxes, hydrophobic plasticizers and olefinic resins proposed in JP-Patent No. 3514736 and JP-pat-appln. pub. 2003-165917 is selected.

An example of the hinge cap of the present invention is described in detail below by referring to the attached drawings.

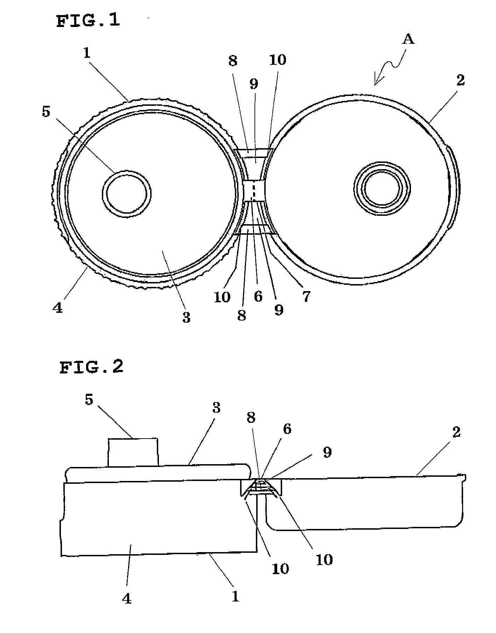

The hinge cap of the present invention comprises, as shown in, for example, Figs. 1 and 2, a cap body 1 comprising a top wall 3, an ejection port 5 formed in the top wall and a cylindrical side wall 4 suspending from a circumferential edge of the top wall, and an upper lid 2 having a cylindrical side wall with the same diameter as that of the side wall of the cap body. The side walls of the cap body and the upper lid are integrally connected via a thin hinge 6 and a pair of elastic connection plates 8, 8.

The thin hinge 6 is radially connected with the respective side walls of the cylindrical cap body 1 and the upper lid 2, and the pair of the elastic connection plates 8 is formed on the right and left of the thin hinge 6. Further, a thin film 9 is provided between the thin hinge 6 and the elastic connection plates 8, and both are integrally formed.

When the upper lid 2 is open as shown in Figs. 1 and 2, the upper surface of the thin hinge 6 is formed nearly flat, and a thin portion 7 is formed on its upper surface in a direction crossing the middle position between the cap body 1 and the upper lid 2. The thin portion 7 is bent when the upper lid 2 is opened or closed.

The pair of the elastic connection plates 8, 8 is connected with the respective side walls of the cap body 1 and the upper lid 2 via a bending portion 10 adjacent to the right and left of the thin hinge 6. While the upper lid 2 is open, the plates are extended horizontally or slightly curved upward. The elastic connection plate 8 is a thin plate having a nearly uniform thickness and an elasticity, and imparts a snap function in opening or closing the upper lid.

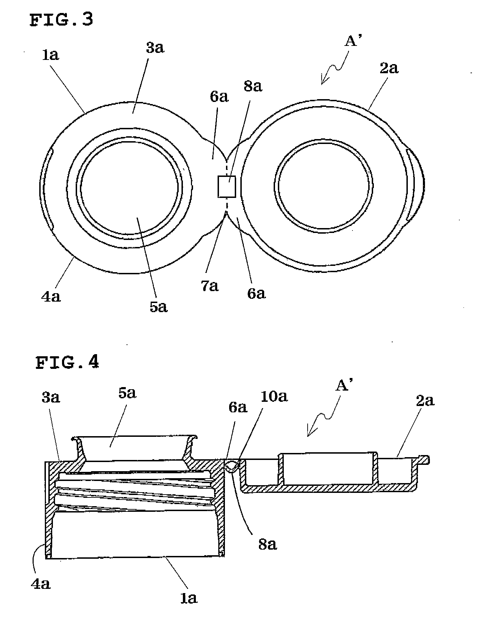

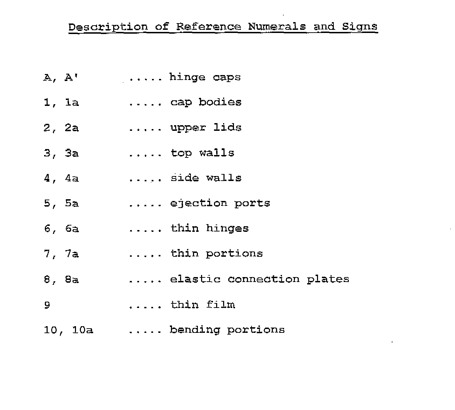

The thin film 9 has, like the elastic connection plate 8, a snap function. The structure of the hinge is not limited to the foregoing mode. A structure in which an elastic connection plate 8a is located in the middle of a pair of right and left thin hinges 6a, 6a as shown in Figs. 3 and 4 is also available. Further, a structure in which the thin hinge 6 is separated from the pair of the elastic connection plates 8, 8 in Figs. 1 and 2 is also available. A known hinge mode can properly be employed. A hinge cap comprising a thin hinge alone without having a snap function is also included in the present invention.

A hinge cap A' of the present invention shown in Figs. 3 and 4 comprises a cap body 1a comprising a top wall 3a, an ejection port 5a provided in the top wall and a cylindrical side wall 4a suspending from a circumferential edge of the top wall, and an upper lid 2a with a cylindrical side wall having the same diameter as that of the side wall of the cap body. The side walls of the cap body and the upper lid are integrally connected via the pair of right and left thin hinges 6a, 6a and the elastic connection plate 8a.

The upper surfaces of the pair of the right and left thin hinges 6a, 6a are formed nearly flat, as shown in Figs. 3 and 4, when the upper lid 2a is open. A thin portion 7a is formed on the upper surfaces thereof in a direction crossing a middle position between the cap body 1a and the upper lid 2a. The thin portion 7a is bent when the upper lid 2a is opened or closed. The elastic connection plate 8a is located in the middle of the pair of the right and left thin hinges 6a, 6a, and connected with the respective side walls of the cap body 1a and the upper lid 2a via a bending portion 10a. The elastic connection plate 8a is a thin plate with a nearly uniform thickness having an elasticity, and imparts a snap function when opening or closing the upper lid.

The hinge cap is installed on a container by, for example, thread engagement between a male thread formed on an outer periphery of a mouth portion of the container not shown and a female thread formed in an inner peripheral surface of the side wall of the cap body. The installation of the cap on the container is not limited to the foregoing method. So-called capping installation is also available in which an engagement protrusion which is engaged with an annular projection formed on the outer periphery of the mouth portion of the container is formed on an inner surface of the side wall of the cap body and installed on the mouth portion by capping.

The hinge cap of the present invention is characterized in that in the measurement of a hinge strength (tensile breaking stress) to be described later, a retention ratio of a hinge strength after opening and closing the upper lid 3, 000 times is 30% or more. When the retention ratio of the hinge strength is less than 30%, the thin hinge portion or the bending portion is liable to break when repeatedly opening and closing the upper lid, which is undesirable. Preferably, the retention ratio of the hinge strength is 50% or more.

### Examples

The present invention is illustrated more specifically below by referring to Examples and Comparative Example. However, the present invention is not limited to these Examples. The flexural elastic modulus of the polyalkylene alkanoate resin used in Examples was measured according to JIS K7171 using test pieces formed by injection molding.

### (Cap)

A hinge cap A shown in Fig. 1 was molded with an injection molding machine (FE120, manufactured by Nissei Jushi Kogyo K.K.) under conditions of a cylinder temperature of 175°C, an injection pressure of 110 MPa and a molding cycle of 18 seconds.

### (Measurement of a hinge strength)

Operation of opening and closing an upper lid of the hinge cap obtained by injection molding was repeated 3,000 times at an angle of from 0 to 180° . Subsequently, the cap body was fixed on a stand of a tensile tester such that the upper lid and the cap body were arranged at an angle of 180°, and the upper lid was pulled vertically upward at a pulling rate of 300 mm/min to measure the hinge strength. This hinge strength was then compared with the hinge strength of the hinge cap which was not subjected to the opening/closing operation of the upper lid.

### (Example 1)

A hinge cap A shown in Fig. 1 was injection-molded using a resin comprising 100 parts by weight of polybutylene succinate, 2 parts by weight of erucic acid amide and 1.5 parts by weight of bis(dipropylphenyl) carbodiimide and having a flexural elastic modulus of 550 MPa. After the molding, the cap was stored at room temperature for 3 days, and the hinge strength was then measured, and found to be 96.5N. The snap function of the hinge was still good after opening and closing the upper lid. Subsequently, a hinge strength of a hinge cap Without opening and closing the upper lid was measured, and found to be 182N. Upon comparing both the hinge strengths, the retention ratio of the hinge strength was 53%. Further, in order to evaluate the resistance to hydrolysis of the cap, the cap was stored at room temperature for 3 days after the molding, and then dipped in warm water of 45°C for 2 months. After the dipping, the appearance of the cap and the snap function of the hinge were confirmed. A change in appearance was not observed, and the snap function was also maintained.

### (Example 2)

A hinge cap A' shown in Fig. 3 was injection-molded using a resin comprising 100 parts by weight of polybutylene succinate adipate and 2 parts by weight of erucic acid amide and having a flexural elastic modulus of 350 MPa. After the molding, the cap was stored at room temperature for 3 days, and the hinge strength was then measured, and found to be 85.1N. Subsequently, a hinge strength of a hinge cap without opening and closing the upper lid was measured, and found to be 127N. Upon comparing both the hinge strengths, the retention ratio of the hinge strength was 67%.

### (Comparative Example 1)

A hinge cap shown in Fig. 1 was molded using a resin comprising 100 parts by weight of polylactic acid and 0.2 part by weight of erucic acid amide and having a flexural elastic modulus of 4,300 MPa. After the molding, the cap was stored at room temperature for 3 days. Subsequently, for measuring the hinge strength thereof, opening/closing operation of the upper lid was conducted. When the operation was conducted 20 times, the hinge was broken, and the measurement of the hinge strength was therefore stopped.

In the hinge cap of the present invention, it is found that the hinge strength and the good snap function can be maintained after opening and closing the upper lid 3, 000 times, as is apparent from Examples 1 and 2. Meanwhile, when the cap is formed of the biodegradable resin (polylactic acid) which is outside the scope of the present invention, the hinge is broken at the initial stage of the opening/closing operation and cannot satisfy the performance as the hinge cap.

### Industrial Applicability

As has been thus far stated, the hinge cap having the biodegradability in the present invention is a cap which is excellent in hinge strength even when repeating the opening/closing operation of the upper lid, secures a sealing retention between the mouth portion of the container and the cap and is excellent in basic performance as a packaging container. It is available as a cap of a container for drugs, foods, drinks, seasonings or the like, and useful as an eco-friendly packaging material.

## Claims

1. A hinge cap having a biodegradability, which comprises a cap body comprising a top wall, an ejection port formed in the top wall and a side wall suspending from a circumferential edge of the top wall, and an upper lid connected with the cap body via a hinge for closing the ejection port, **characterized in that** the cap is made of a polyalkylene alkanoate resin having a flexural elastic modulus of from 200 to 900 MPa.

2. The hinge cap having the biodegradability according to claim 1, wherein the cap is made of a polyalkylene alkanoate resin having a flexural elastic modulus of from 300 to 800 MPa.

3. The hinge cap having the biodegradability according to claims 1 and 2, wherein the polyalkylene alkanoate resin is polybutylene succinate, its copolymer or a mixture thereof.

4. The hinge cap having the biodegradability according to claim 3, wherein the copolymer of the polybutylene succinate is polybutylene succinate adipate.

5. The hinge cap having the biodegradability according to any of claims 1 to 4, wherein the polyalkylene alkanoate resin contains from 0.01 to 5 parts by weight of a fatty acid, a fatty acid amide or a mixture of a fatty acid and a fatty acid amide, per 100 parts by weight of the polyalkylene alkanoate.

6. The hinge cap having the biodegradability according to any of claims 1 to 5, wherein the polyalkylene alkanoate resin contains from 1 to 10 parts by weight of an antiblocking agent, per 100 parts by weight of the polyalkylene alkanoate.

7. The cap according to any of claims 1 to 6, wherein the polyalkylene alkanoate resin contains from 0.1 to 10 parts by weight of a hydrolysis inhibitor, per 100 parts by weight of the polyalkylene alkanoate.

8. The hinge cap having the biodegradability according to any of claims 1 to 7, wherein the hinge is adapted to have a snap function in turning the upper lid relative to the cap body.

9. The hinge cap having the biodegradability according to claim 8, wherein the hinge comprises a thin hinge by which to connect the side wall of the cap body and the side wall of the upper lid, and a pair of elastic connection plates by which to connect the side wall of the cap body and the side wall of the upper lid on both sides of the thin hinge.

10. The hinge cap having the biodegradability according to claim 9, wherein the thin hinge and the elastic connection plates are integrally formed via a thin film.

11. The hinge cap having the biodegradability according to any of claims 1 to 10, wherein a retention ratio of a tensile breaking stress of the hinge after opening and closing the upper lid 3,000 times is 30% or more.

12. The hinge cap having the biodegradability according to any of claims 1 to 10, wherein a retention ratio of a tensile breaking stress of the hinge after opening and closing the upper lid 3,000 times is 50% or more.
